# EUROPEAN PATENT SPECIFICATION

(11) **EP 2 250 412 B1**
(45) Date of publication and mention of the grant of the patent: **20.06.2012**
(21) Application number: 08724035.4
(22) Date of filing: 07.03.2008
(51) Int. Cl.: F16K 27/06, B29C 45/00, B29C 45/16

(54) **MONOBLOCK BALL VALVE AND MANUFACTURE METHOD THEREOF**
MONOBLOCKKUGELVENTIL UND HERSTELLUNGSVERFAHREN DAFÜR
CLAPET A BILLE MONOBLOC ET SON PROCEDE DE FABRICATION

(43) Date of publication of application: 17.11.2010
(73) Proprietor: Celula 3pp, S.a., 2431-908 Marinha Grande (PT)
(72) Inventor: DOMINGUES MATOS, Arnaldo, P-2430-012 Marinha Grande (PT)
(74) Representative: Ferreira, Maria Silvina
(86) International application number: PCT/PT2008/000011
(87) International publication number: WO 2009/110813

(56) References cited:
- EP-A- 0 242 927
- DE-A1- 4 414 716
- DE-A1- 4 442 979
- GB-A- 1 222 559
- GB-A- 1 580 278
- US-A1- 2004 112 562

## Description

### Field of the Invention

The present invention relates to a monoblock ball valve manufactured in thermoplastic material by injection moulding methods. The innovations described will focus mainly on the body of the monoblock valve, as well as on the improvements to exclude some deficiencies detected in the valves currently available in the market. The body of the valve will consist of a single solid block.

The Valve presents a set of technical innovations to improve the product's functionality, which includes establishing improvements on the conception of the valve's ball, integrating a single sealing element in the product (presently inexistent), the functional improvement of the valve's fast coupling system to the tube, reducing the number of valve components as well as the material applied in all components. Moreover, an alternative is also considered concerning the introduction of valve reinforcements, whose function is to increase the valve's resistance against pressure and to decrease the effect of volumetric contraction resulting from the cooling of the plastic, whilst the body injection onto the remaining valve components.

One of the most efficient techniques of processing plastic material is assuredly the injection moulding. The process consists of heating up a plastic material to its melting point, in a cylinder surrounded by thermal resistances. Inside the warm cylinder operates a spindle, which "chews" the material when under rotation pushing it to the front area of the cylinder. Afterwards, the material will be injected by the relocation movement of the spindle that forces the melted plastic material inside the mould cores, wherein the material is worked up and wherein it cools down assuming its final shape. Finally, the mould opens and the plastic piece is extracted. The process enables extremely high productive cadencies, with enhanced reproductiveness and consistence, being the most efficient process for the production of high-complexity plastic pieces.

The overmoulding has been already used in valves manufacture, see for example DE 44 42 979 . Cases of similar products are known wherein the manual or automated systems are used to apply sealings and/or other components, on which the body is later injected, presenting however different results in product quality being consequently hardly compared to the present process and product.

Besides the innovations in the manufacture method, the present document further foresees the solutions to:
- compensate deficiencies in sealing valves which are assembled with accessories for fast coupling to the tube;
- obtain a uniform roundness around the ball so that a perfect sealing is obtained;
- increase the valve's resistance to high-pressure

### Brief Description of the Drawings

Many of the aspects of the invention can be better understood with reference to some drawings thereof. The components in the drawings are not necessarily to scale, being instead emphasised the clear illustration of the principles inherent to the present invention. The drawings are non-limitative and aim mainly to a clearer understanding of the following description:

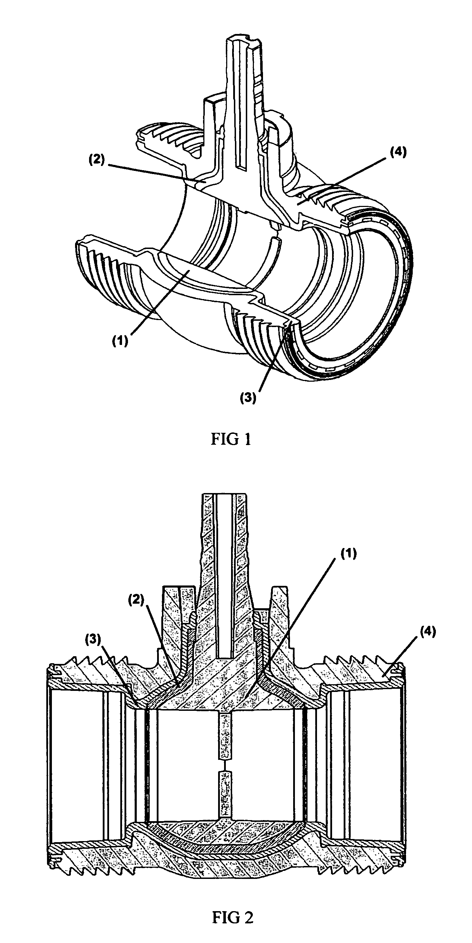

Fig. 1 shows a sectional three-dimensional perspective view of an embodiment of the ball valve according to the invention;
Fig. 2 shows a side sectional view of an embodiment of the ball valve according to the invention;
Fig. 3 shows a side sectional view of a valve of the state of the art;
Fig. 4 shows three-dimensional perspective views of the central components of the ball valve according to the invention;
Fig. 5 shows a perspective view of the ball filling element or ball filling core;
Fig. 6 shows a sectional perspective view of the ball with the core-filling element;
Fig. 7 shows a sectional perspective view of the single sealing element (3) and the remaining components;
Fig. 8 shows a perspective view of the single sealing element (3) and the remaining components;
Fig. 9 shows a cross-sectional perspective view of the valve with a particle filter (20) which is placed inside the valve;
Fig. 10 shows a perspective view of the valve body (4) and the remaining components;
Fig. 11 shows sectional and non-sectional three-dimensional perspective views of the process of sequential injection showing the overmoulding stages;
Fig 12 shows sectional three-dimensional perspective views of the core filling element, of the core filling element and the ball, and of the integration of both inside a component obtained with aid of an expander;
Fig. 13 shows three sectional three-dimensional perspective views for three positions of the ball valve: totally open (A), half open (B) and closed (C);
Fig. 14a, 14b and 14c show three sectional three-dimensional perspective views of the rotational system of the ball inside the mould of the valve body;
Fig. 15 shows the partition line (x) of the moulds marked in a ball (2) and in a cross section of the valve;
Fig. 16a and 16b show the perspective views of the placement process of the internal reinforcement element which does not allow an excessive contraction of the sealing;
Fig. 17 shows a set perspective view enhancing the sealing points in the connectors' area and in the upper area of the valve stem;
Fig. 18a, 18b, and 18c show the side sectional set views of the system's clamping sequence comprising a fast coupling on the right side and a coupling with a thermal welding connector (40) on the left side;
Fig. 19 shows a perspective view of the tube clamping element (12) and the abutment element of the sealing;
Fig. 20a and 20b show perspective views of a metal washer for the tube clamping element;
Fig. 21 shows a perspective view of the set;
Fig. 22 shows a perspective view of the provided valve and nut socket wrench thereof;
Fig. 23a, 23b and 23c show front views (explosion) of all components of the ball valves, both in most conventional concept and in the proposed new concept;
Fig. 24 shows a front view of a conventional ball valve and of the new ball valve;
Fig. 25 shows a perspective view of an anti-particle filter.

### Background of the Invention

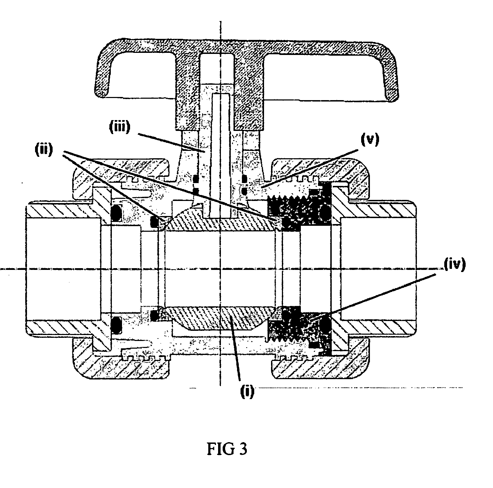

The ball valves are well known and normally include the following components: (i) ball, (ii) ball sealings or ball seat, (iii) ball actuator or ball stem, (iv) body cover, (v) valve body, as well as other accessories for the connection of the same to hard or flexible tubes, as shown in Fig. 3.

This object is used for providing a flow restriction or interruption of any kind of liquid substance flowing along a tube section. These valves allow a liquid flow variation, due to the position deviation of the ball.

This flow restriction takes place because, when rotating the ball, the ball opening for the passage of the liquid reduces gradually, till reaching a closed position, wherein the flow ceases due to the obstruction of the liquid stream.

In conventional thermoplastic ball valves all components are separately moulded and subsequently assembled to form the final product. In this case, since there's a need for setting up the components of the valve's core, there is also the need of an additional component, meaning the body cover (iv) to allow the assembly of the ball (i), of the sealings (ii) and of the ball's actuator (iii) inside the same.

Another important characteristic in conventional ball valves is that, in order to obtain a good sealing, the ball (i) necessarily requests a surface finishing procedure aiming for the removal of possible contrasting contractions, edges or other defects that might compromise its roundness and might eventually cause leakage.

Another characteristic inherent to these conventional valves is the large number of components that integrate the whole set. Generally, the set consists of 18 elements, 7 of which being o-ring or joint rings of circular section.

US4705058 describes a ball valve with a plastic body manufactured around a fine metal cylinder. Although this document discloses an injection valve, the presence of the metal cylinder leads to a heavier and more inflexible valve than the one disclosed in the present request.

US4553562 discloses a ball valve comprising a resin valve body, whose box is set up by moulding. In this case the valve body is previously mounted unlike the valve of the present application.

US4180542 discloses a construction method of a ball valve by overmoulding wherein the several types of moulds used therein are described. Concerning the present document the application foresees not only a different moulding cycle, but also a different construction of the ball and the single sealing element that involves the whole ball, as well as totally different coupling systems.

### Description of the Invention

Although the ball valve is already frequently applied in water pipe systems, the search for a solution of functional integration of some of its components in a simpler plastic system, or even the elimination or substitution of some of its components, supports an interesting opportunity to overcome in the market, with a highly innovative product as far as design and functional integration are concerned, being obtained by a highly automated and innovative manufacture process.

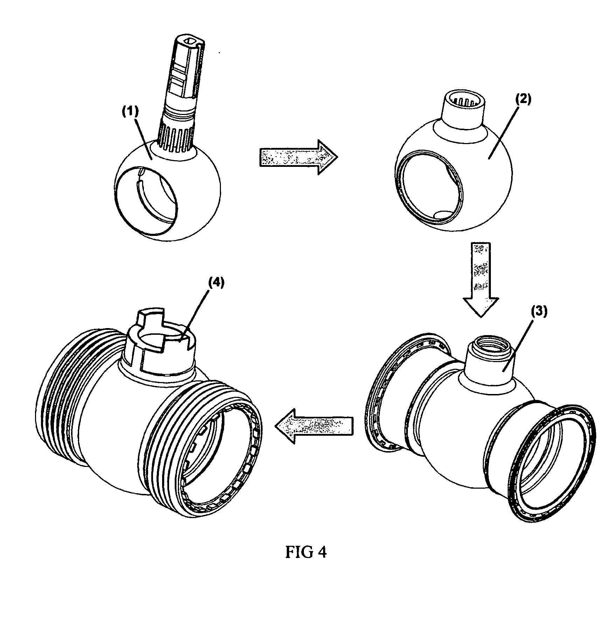

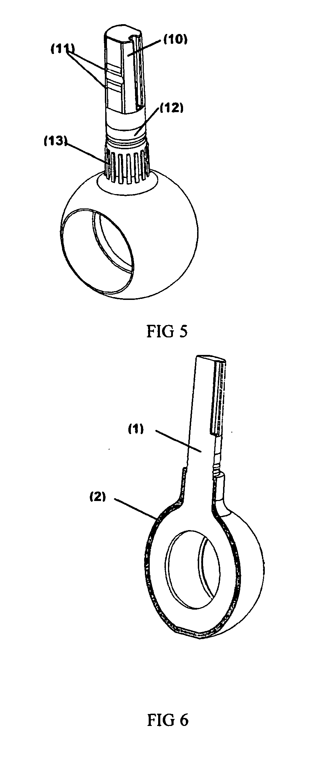

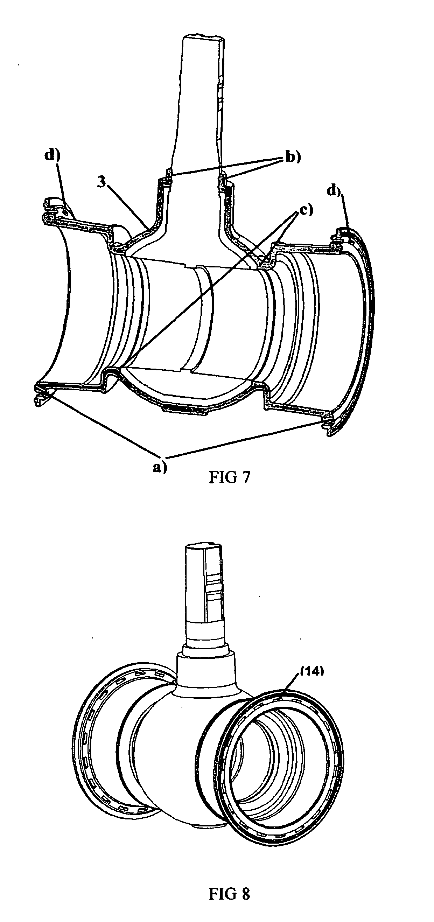

The ball valve according to the present invention comprises at least the following pieces (see Fig. 4):
- A ball filling element or a ball filling core (1) with a valve control stem which is essentially spherical-shaped comprising a cylindrical channel whose axis crosses the ball centre and it is essentially perpendicular to the axis of the control stem;
- A ball (2) with a hollow spherical shape that involves the ball filling element (1), preferably presenting a uniform thickness of 2.5 - 3mm;
- a sleeve-type single sealing element (3), that covers the ball (2) completely as well as the interior of the valve body, comprising two cylindrical section openings which correspond to the inlet outlet areas of the valve body (4). The said sleeve further comprises an opening in the area surrounding the stem's diameter; and
- A valve body (4) with an essentially hollow cylindrical shape comprising the inlet and outlet areas in its ends and a radial opening in the middle of the body for the rolling movement of the stem, wherein both inlet and outlet areas comprise coupling means to the tube.
- The ball filling element (1) or core is a spherical component with an opening for the liquid flow, also integrating the spur (spike) of the valve control handle, designated stem. The element presents on the side of the stem (circular area) a placement slot (10) to assemble the handle (39). In the plane walls of the stem, fitting/clamping lumps (11) are provided enabling the handle (39) to fit with a click. In the stem base two half-round grooves (12) are provided wherein the sealing of the single sealing element (3) is carried out. The component further presents fixing ribs (13) with the purpose to mechanically fix the component which is thereon overmoulded
- the ball (2), see Figure 5;
- The ball (2) is basically a skin-type cover that intends to eliminate any superficial imperfection that might occur in the ball. It has a reduced and uniform thickness, thus avoiding some typical defects inherent to the injection of highly thick components, such as: warpage, voids or sink marks, etc. The objective is to provide a perfectly spherical ball presenting a surface quality that allows its good rotation and a perfect sealing between the said ball and the sealing element. The ball's geometry is mainly characterized by an uniform thickness of 2.5mm to 3mm, since this thickness range enables the component to a better adjustment of the injection process. In the injection moulding process, there is a set of factors that might be decisive in the high quality of our final product. Therefore, by means of components with thin and uniform wall thickness it will be easier to obtain good quality products both on a dimensional/geometric perspective and on a visual aspect/superficial quality level. The aforementioned typical defects of injection are usually avoided when plastic pieces with thin and uniform wall are projected, always bearing in mind the ratio between component wall and mechanical behaviour, see Fig. 6;
- The single sealing element (3) that totally involves the ball and the interior of the valve body (4), also upholds the sealing in the stem area (b) and abutment area of the connectors (a). Its geometry was conceived to involve the whole ball, sealing the abutment area of the opening (c) and extending outside the valve body in order to promote the sealing in the valve stem area (b) and in the abutment area of the connectors that bond the tube (a), see Fig. 7. In those areas, the geometry presents some lumps that increase the contact area, allow a larger deformation of the rubber, thus improving the abutment of the components and promoting a better sealing.

Since the sealing material does not have affinity with the material composing the remaining components, it is possible for the ball to rotate inside the valve. It is however important to promote the mechanical fixation of the sealing to the valve body and for that end, fixing slots were made (14) in the sealing ends, see also Fig. 8.

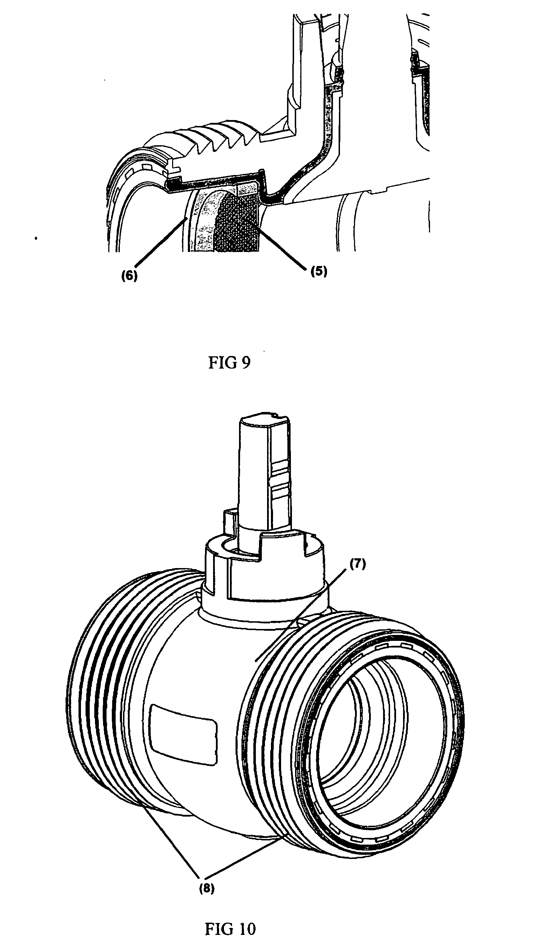

It is also important to point out a small half-round bulge (6) that is projected inside the sealing and undertakes the task to retain the particle filter (5) which can be placed inside the valves, see Fig. 9.

- The valve body is the component involving all other components and it will be injected in the last stage of our sequential process. Its geometric shape is based on a central spherical shape (7) that extends to the ends by two cylindrical branches (8) wherein the connections of the tubes are linked and the nuts are clamped. The shape of the spherical central geometry is due to the ball that operates in its interior. The spherical shape (7) allows a higher mechanical resistance of the set. The cylindrical branches (8) are the extension of the valve body to the tubes wherein thread for the valve nut clamping are provided, see Fig. 10.

### Features

The main innovative features of the present monoblock valve are:
a) a smaller number of components due to overmoulding and assembly inside the moulds of the basic valve components;
b) the introduction of ball filling element (core) thus allowing the sequential injection to obtain a uniform wall thickness in the ball, therefore avoiding its ovalness;
c) introduction of a stage in the process wherein a slip-type innocuous lubricating substance is inserted;
d) integration of an interior reinforcement;
e) Integration of a single sealing element in TPE material - injected thermoplastic elastomer;
f) the fast coupling/connecting system of the tube, using universal nuts for every connection;
g) the fast maintenance/substitution of the monoblock valve;
h) a reduction of the components, as well as the valve's size and weight (less raw material) due to overmoulding and assembly inside the moulds;
i) the introduction of an anti-particle filter inside the valve body;

### a) Overmoulding and assembly of the valve components inside the injection moulds

In spite of the fact that ball valves are already known both technically and commercially, this particular invention provides innovations in the manufacture process thereof, presenting many advantages when compared to conventional valves. In valves currently available in the market the pieces (i), (ii), (iii), (iv), shown in Figure 3, are individually manufactured and are subsequently assembled to form the final product. As a result of requiring a larger amount of components and additional assembly procedures, this solution implies in itself higher costs, increasing the valve's production time when compared to the foreseen monoblock valve.

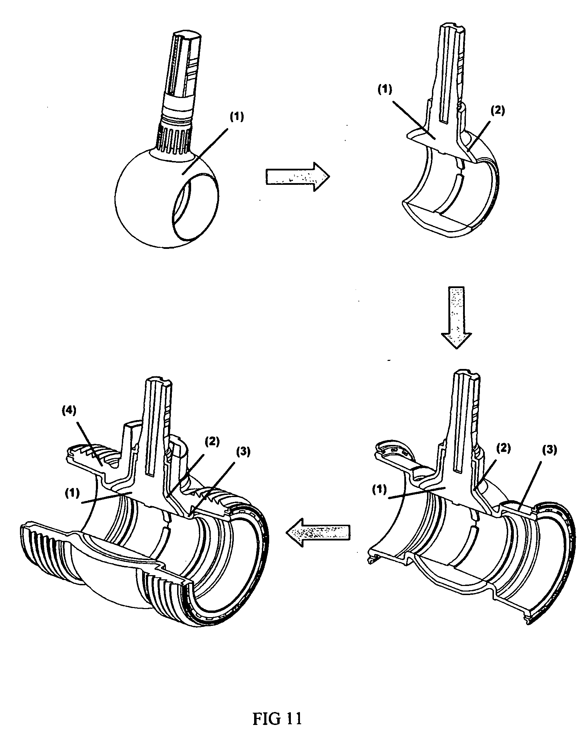

The manufacture process of the disclosed monoblock ball valve, is based on the sequential injection of the four main components that form the solid body of the valve, wherein each subsequent component is injected on the previous one thus involving it, as shown in Figure 11. In the end of the four moulding steps, a single solid and inseparable body is obtained.

Several methods can be used to mould a monoblock ball valve. A possible method uses a plastic injection mould with four rotative cores (moulding areas) wherein each component is injected and transferred to the next cavity for overmoulding the following component during the opening/closing operation of the mould.

For instance, in a hypothetical initial moment "t0" the first ball filling element is injected (1) in cavity no. 1 of the mould. The mould opens and the transfer of this component to cavity no. 2 occurs which will inject, in moment "t1", the ball on the filling element injected in the previous cycle. In this precise moment "t1" a new filling element is also formed. By opening the mould, the pieces (1) and (2) are transferred to cores no.2 and no.3 respectively, due to the rotation of the respective cores. In moment "t2" the overmoulding of components (2) and (3) occurs, as well as the injection of a new filling element (1). New plug rotation takes place while opening of the mould and, finally, in moment "t3", the overmoulding of components (2), (3) and (4) occurs as well as a new filling element is produced in the cavity no.1. In this moment the monoblock valve body is complete and a complete valve will be produced in each new cycle, since simultaneous mouldings occur in all 4 cores of the mould.

According to the present invention, this is the method that enables an actual manufacture of monoblock ball valves in thermoplastic materials, being however other processes possible, wherein the transfer of the presented components, from one cavity to another, inside the same mould or in different moulds, it carried out according to the principle presented in Figure 11.

Another method that can be used to produce a monoblock valve, includes the use of robots to transport the components that compose the valve body from one cavity to its subsequent. In this case, the robot may transfer the components among the four cores of a same mould or between the cores of four different moulds, wherein each mould produces one of the components that compose the monoblock valve. It is obvious that the transporting procedure of components (1), (2) and (3) from one cavity to another could be carried out manually by the injection machine operator.

Therefore, independently of the placement of the components in the cores for the subsequent overmoulding, the real innovation of this process resides in the fact that the monoblock valve is based on the overmoulding principles of its components, with the purpose of producing a monoblock valve, in other words, a single body valve with integrated functionality (ball rotation inside the valve) in a complete assembly process of the components inside their own injection moulds. This is impossible of being rendered in the current process of valve production.

A further alternative, in any of the 2 methods previously described, the ball filling element (1) integrated with the valve control stem can be produced by different methods, such as:
- Lost-core injection moulding wherein a spherical core made with a low melting-point alloy, is placed inside the mould's cavity to shape the interior of the ball;
- Another method would be the introduction of mechanisms inside the mould, such as retractile cores, to shape the interior of the ball;
- gas or water assisted injection, with resource to an inert gas or water, it is possible to inject highly thick components, wherein the external wall of the component is compact while its interior is hollow;
- The use of foaming or nucleating agents is another valid method, with the objective to inject thick components with a compact plastic external film and a foamy interior core (9). This injection technique can set out another situation, wherein the ball filling element will integrate itself the ball (the thickness of the ball being added, see illustration 12). This situation would lead to the elimination of a stage in the process, the ball injection. The thickness of the ball would be integrated with the ball filling element, integrating all functionalities of the two components. This integration is in itself possible mainly due to the injection with an foaming agent, which would lead to a reduction in production costs, both of machinery and raw material consumption, which would be clearly beneficial for the new integral assembly concept.

Still another alternative foresees these being injected in the traditional method and receiving surface finishing procedures for imperfection removal, being later assembled to the sealings and overmoulded with the valve body, forming a single body.

Part of the thickness of the filling element (1) spherical body can be at any time substituted by an equivalent component produced in a material that might be later removed, such as: a low melting-point metal, a polymer soluble in acid or other substance, aiming however to reduce the ball's (2) thickness.

The process further integrates a rotative system for the ball (2) inside the mould of the valve body (4). This system operates by the end of the injection of the last component, the valve body (4), when it is still warm, turning the ball in the valve, still inside the mould, enabling the functionality of the ball and also keeping it from adhering to the sealing because of temperature effect.

The innovation resides in carrying out this operation inside the injection mould. Therefore, after injecting the body and having the component still inside the mould, a ball rotative mechanism, for the ball is actuated. By introducing this operation inside the last injection mould, we are innovating and optimizing the production tools' functionalities. The mould which was mainly responsible for injecting the body and simultaneously promoting the assembly of all other valve components, will also undertake another functionality, in this case the validation of the valve rotation.

The option of integrating as many operations / functionalities inside a single tool as possible, in this case in an injection mould, is certainly an innovative and differentiating concept.

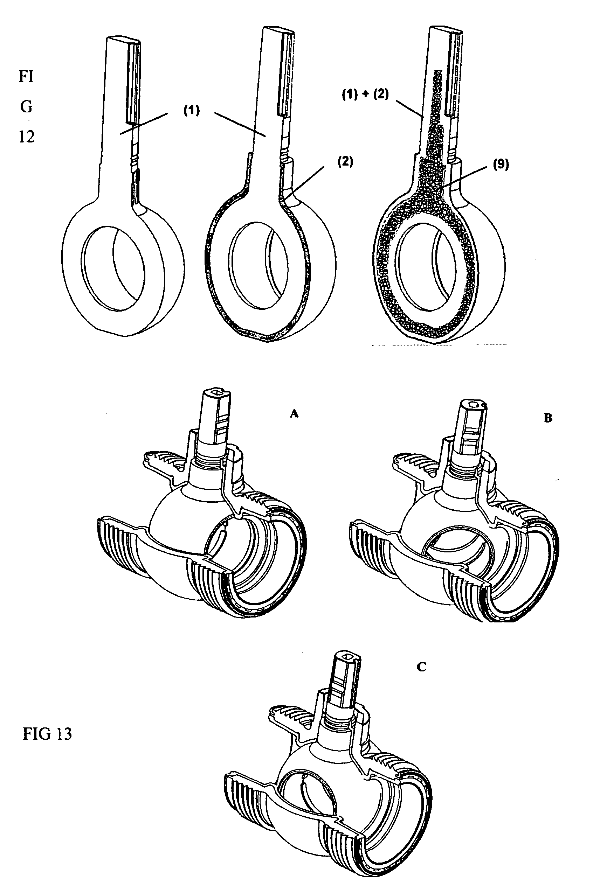

The operation principle of the rotative system of the valve is based on rotating the ball (2), similar to when the lever handle is placed and rotated, as previously shown (see sequence A/B/C in Fig. 13). In order to carry out this operation a hydraulic cylinder (15) was placed in the mould which makes the rack (16) rise and lower, which will in turn drive a toothed wheel (17), associated with a rotative core (18) that fits in the lever handle's stem spike. By actuating the hydraulic cylinder (19), that moves the rack upwardly and downwardly, moving enough to complete a quarter turn of the toothed wheel and consequently of the rotative core on the stem. Thus the ball is allowed to rotate inside of the mould (20) (21) (22), while still hot. This operation will be repeated several times, until a sufficient cooling state of the component is reached to extract of the mould.

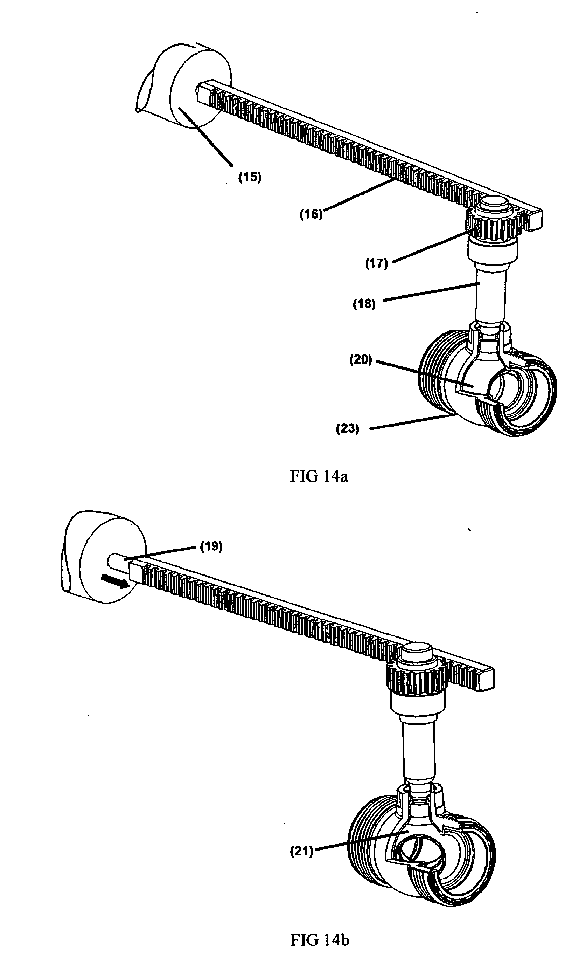

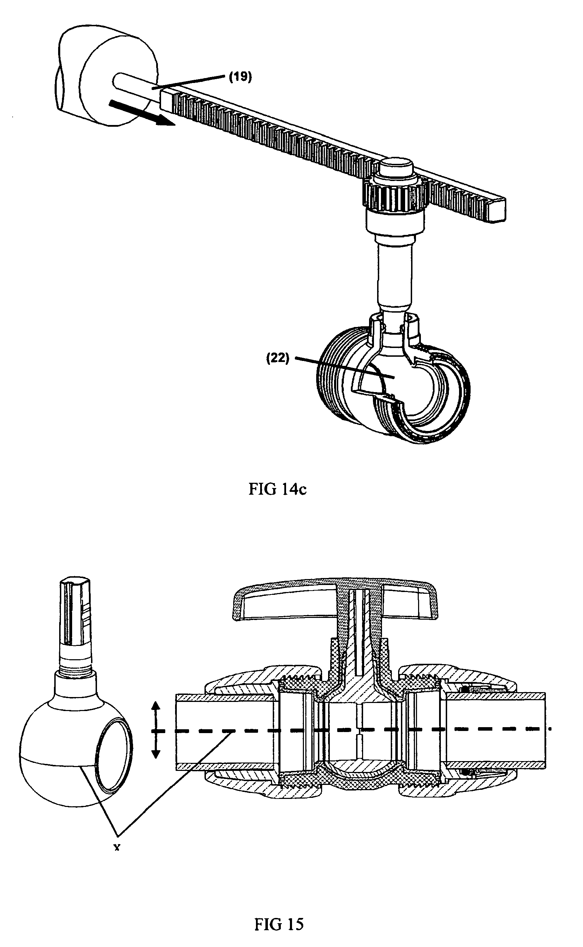

Figures 14a, 14b and 14c list all system components (including the monoblock valve by the end of the body (23) Injection stage) besides illustrating the entire operation of the rotative mechanism of the ball (20), (21), (22).

### b) Injection sequencing - homogenization of the ball's thickness

In currently available conventional ball valves, the balls (2) are typically injected separately, being generally followed by a surface finishing procedure, usually with lathe operations, to remove imperfections in its spherical surface which result from factors inherent to the injection process, mould construction or other situations that might compromise the sealing between the ball (2) and the ball's sealing (3). The process herein described eliminates this auxiliary operation (surface finishing), which is costly in terms of machinery.

In order to obtain a perfect sealing between these two components, the sealing surfaces of these components must be placed in all contact areas so as to avoid that underpressure the liquid escapes amidst these surfaces and eventually instigates leakages. There are many factors that might compromise the sealing quality among the ball (2) and the ball's sealing (3):
- Differentiated contractions (shrinkage) caused by thickness differences in the component;
- Unbalanced cooling wherein the component suffers from differential contractions;
- Low injecting or compacting pressures;
- Different contraction rates for components made of different plastic materials;
- Imperfections in the mould's partition lines;
- edges, among others.

In order to overcome such problems and to obtain a roundness that gives way to a good sealing, it has been sought to maintain a ball wall thickness (2) as homogeneous as possible. This is obtained due to ball filling element (1) which removes thickness from the ball maintaining it as homogeneous as possible within the acceptable roundness tolerances.

Moreover special attention was drawn to the placement of the mould's partition lines for the said components so that the ball rotation is not compromised or interrupted around its axis, during the valve's actuation.

The moulds' partition line (x) will be preferentially placed in order to allow the ball component to rotate without causing any interference with the sealing area. Should this interference occur, it would be caused by a possible flashing formation in the mould's joint, which could damage the sealing area. The partition line (x) will be preferentially placed along the ball body in a central position to the diameter of the ball and aligned in the direction of the flow opening, see Fig. 15. When the ball is rotated, it will present its partition line transversally to the valve's rotation axis.

Provided that the ball filling element will be the first to be injected in this position, all other moulds will have the same partition line disposition in order to allow an easy automation of the process and manipulation of the components by the robots.

Another innovation applied in the set filling element/ball is the incorporation of the stem in the filling element, which is a separate component in conventional valves.

Another concern to take into account is the fact that the ball (2) and the ball's sealing (3) are manufactured with different materials: ball in POM or PP, sealing in TPE, EPDM or PUR to avoid that the chemical affinity among equal materials, provokes welding between the ball and the sealing, due to high temperatures among the contact surfaces of these components, during the injection process of the sealing (3) over the ball (2). Since the materials are different and POM or PP do not have any affinity with TPE, EPDM or PUR a superficial welding will not occur. The ball (2) will be able to slide towards the sealing (3) during the valve's actuation.

More specifically, the method can be used for any type of thermoplastic or thermosetting, provided that the processing temperatures and material chemical affinities respect the criteria of each overmoulding procedure. So being, for the first moulding of the ball filling element (1) the material in question might be Polypropylene (Homo, Glass, Random), PVC, PVDF, PPSU, PSU, ABS, POM, PEx, etc.

In the second moulding of the ball (2) a certain chemical affinity must be observed between the first material and the material now injected. In this component one can use the same list of materials above presented. However one should point out, that the ball filling element and the ball will probably be made of the same material.

The third component, the single sealing element in TPE (3) is unlike the others a thermoplastic rubber known as TPE (thermoplastic elastomer). For its formulation, there are countless compositions that might have thermoplastics or thermosettings based matrix, such as Polypropylene (PP), Polyethylene (PE), Polyester (UP), Polyamide (PA), silicone (SI) and Polyurethane (PUR). In the present case, we have a TEEE polyester based thermoplastic rubber (Thermoplastic polyester elastomer). These injectable rubbers have a high mechanical resistance and a good performance at service temperatures up to 120°C.

On the fourth moulding the valve body (4) will be injected. This should be made of a material with good mechanical, chemical and thermal characteristics. Once again we present the same list: PVC-U, PVC-C (chlorinated), PVDF, PP-H, PP-R, PP-R+30%GF, PP-CRT, ABS, PSU, etc.

The valve body is the component that will have to support all components of the valve and simultaneously promote the valve functionality together with the ball and sealing.

c) However, as the sealing element contracts when cooling down, thus creating a compression tension on the ball (2), this might hinder the sliding of the ball towards the ball sealing (3) during the valve's actuation. Consequently, this difficulty will be overcome should it occur, submitting the ball (2) to a bath, in a volatile product and/or in an slip-type antiadherent substance that will deposit a lubricated layer of some hundredths of a millimetre before the sealing element (3) is moulded over the sphere (2). This volatile substance must be innocuous and it will work as a buffer allowing the sealing to contract on this thin layer, which by volatizing will allow the rotation of the ball (2) inside the sealing (3). Preferably, the lubricating film will be placed on the ball during the transfer of the component to the mould which will inject the sealing element, to give way for the ball to rotate with minimal adherence inside the valve.

d) the solution found to overcome the problem of excessive contraction of the valve body (4) over the sealing element, is the introduction of two elements designated internal body reinforcements (24a) and (24b) (assembled on the sealing element, which by working as an internal shield don't give way for the valve body (4) to excessively contract on the sealing element. This shield retains the whole contraction of the valve body (4) allowing the valve internal structure to be reinforced without considering the abutment pressure between the ball and sealing surfaces.

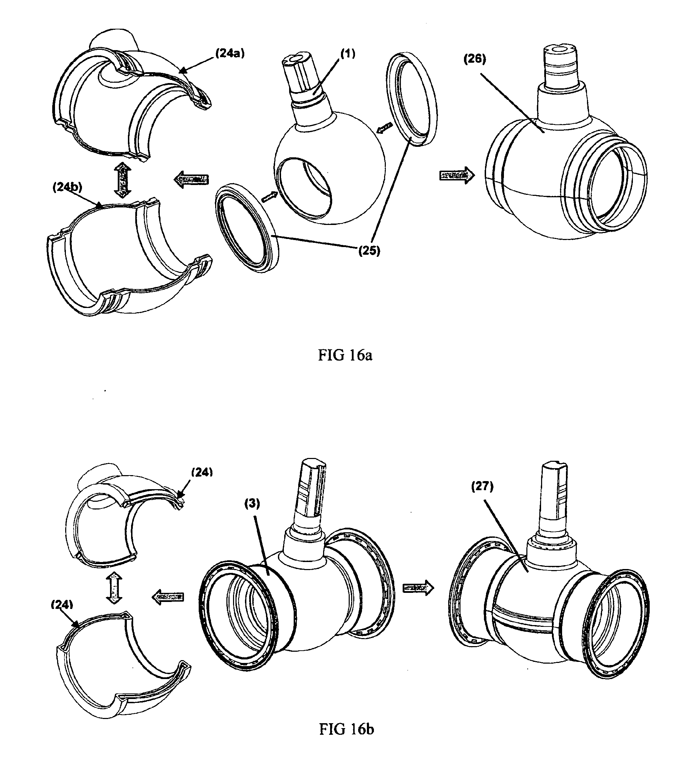

Fig. 16a and 16b illustrate different embodiments of such reinforcement, a more conventional implementation, with sealing placement and reinforcement assembly (highlighting the ball seats (25) and the core with assembled reinforcements (26)) and integrated assembly, wherein the reinforcement is already placed on the single sealing element overmoulded in the previous stage (the sealing element (3) having assembled reinforcements (27)).

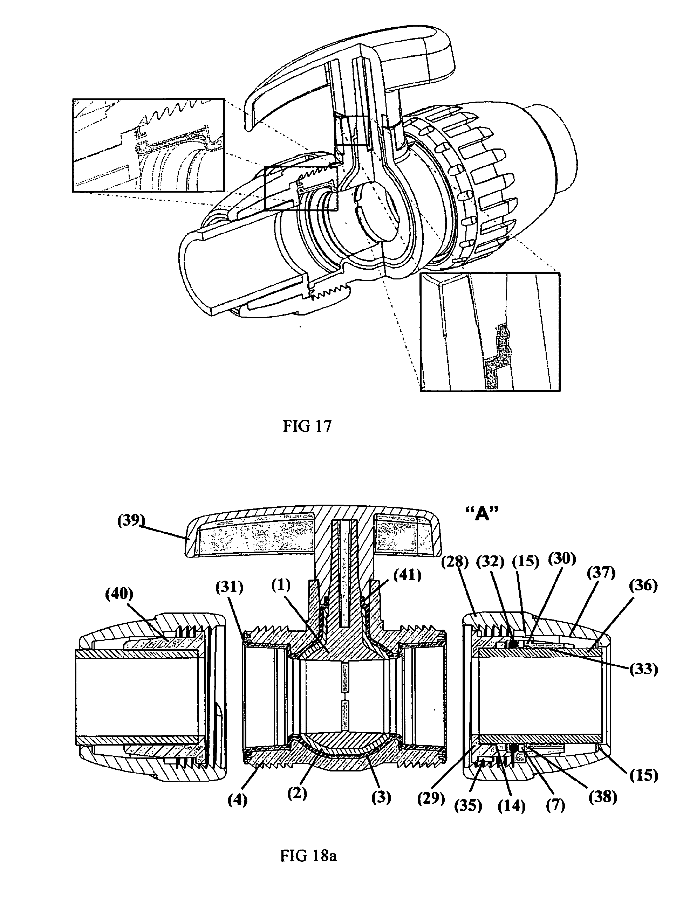

e) on the other hand, the sealing element will be designated single sealing element, taken that unlike conventional valves, the sealing element covers the whole ball and the whole internal chamber of the valve where the liquids flow, thus allowing a more effective sealing (sealing along the whole ball surface). On the other hand, the single sealing extends to the outer edge of the valve body, both in the upper area by stem and on the side wherein the connectors are adjusted. The sealing element therefore endorses the sealing in the stem area and also in the abutment area of the connectors, eliminating four o-rings as evidently illustrated in Fig. 17.

f) Quick coupling system for tube using a monoblock valve. A hydraulic.ball valve may typically be used together with several accessories, usually connecting hard or flexible tubes or hoses by means of diverse processes such as: screwing, gluing, thermal welding, ultrasonic welding, thermofusion, quick coupling, among others. Figure 18a illustrates an example of the assembly of accessories for quick coupling (on the right) and coupling with thermal welding connectors (on the left) for monoblock valves.

Another proposed improvement concerns the assembly of the monoblock valve with quick coupling accessories in flexible and semi-rigid tubes or hoses. In these coupling types the tolerance variation in the tube or hose diameter is relatively high, which makes it difficult to obtain an efficient sealing effect.

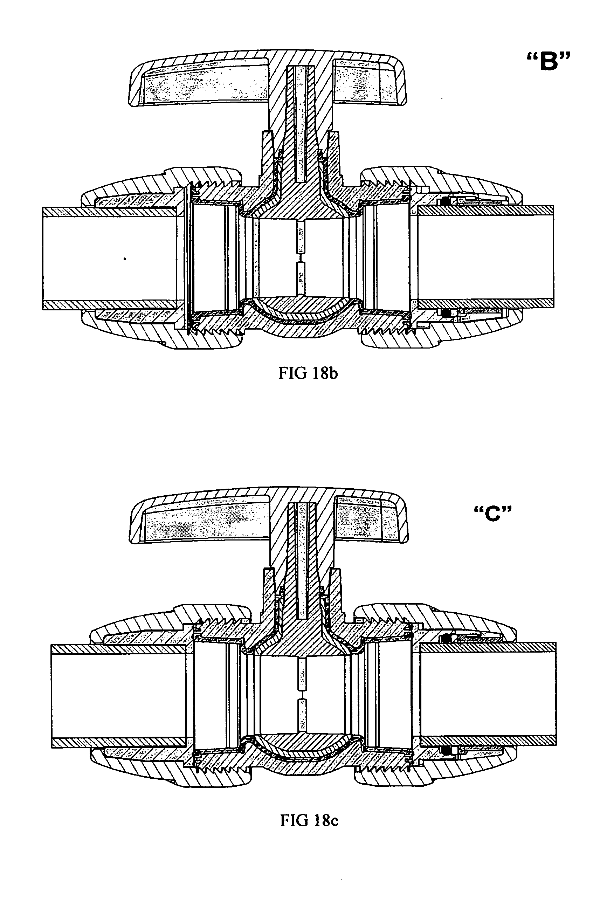

In order to absorb this tolerances variation in the tubes, a system comprising three components was projected: clamping nut (28), abutment element of the sealing (29) and tube clamping element (30), as shown in Figures 18A, 18B and 18C.

This system comprises in its inlet and outlet:
- An essentially annular-shaped abutment element of the sealing (29), comprising a recto radial abutment surface which receives the end of the tube in its interior and abuts to the valve body (4) close to the end (31) of the single sealing element (3) and has a longitudinal extension to hold the o-ring 32) and tube clamping element (30);
- an o-ring (32) that is assembled in the grove of the abutment element of the sealing (29);
- a tube clamping element (30), essentially conical and annular-shaped and extending longitudinally comprising teeth (33) in the interior surface and a slot (34) projected in order to reduce its diameter and to absorb variations in the tubes' diameter; and
- An essentially annular-shaped clamping nut (28) extending longitudinally which comprises an interior thread in one end that will promote the coupling to the valve body (4), as well as a conical interior surface which by being clamped, presses the abutment element of the sealing (29) against the wall (31), being simultaneously the o-ring (32) forced to abut to the bottom of the abutment element of the sealing (32), simultaneously, the tube clamping element (30) is also pressed so as to press the teeth (33) against the tube.

This system operates as follows: initially the o-ring is assembled (32) in the box of the abutment element of the sealing (29) and afterwards the abutment element of the sealing (29) is assembled, according to Figure 18A. Next, tube clamping element (30) is concentrically fit in the clamping nut (28).

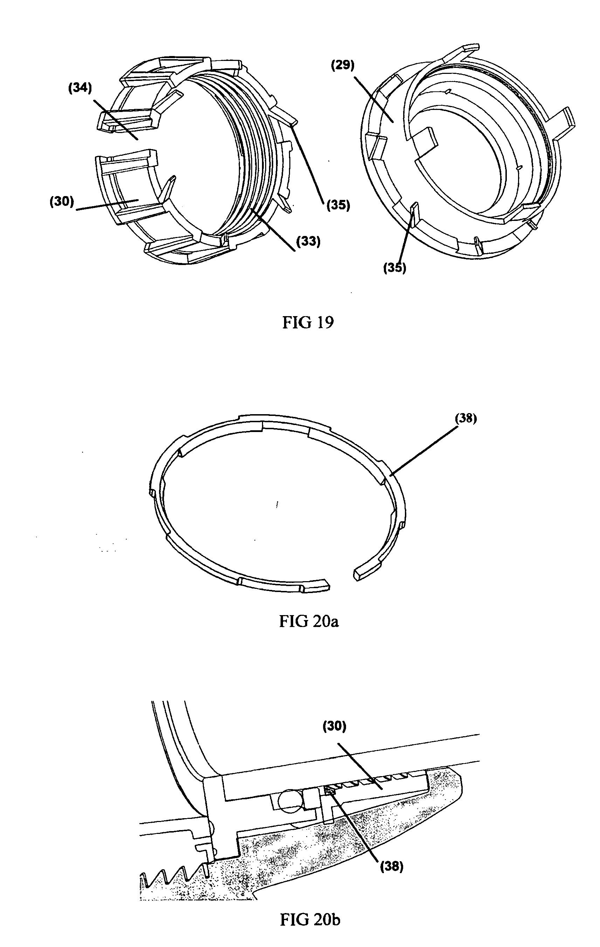

The nut is than rotated (one or two threads) so that the o-ring (32) and the abutment element of the sealing (29) are not pressed yet. Soon after, the tube is introduced until it leans on the bottom surface of the abutment element of the sealing (29), as shown in Fig. 18a. The clamping of nut (28) proceeds until reaching position "B" as shown in the illustration 18b, so that the element (29) is adjusted and pressed against the sealing (3) wall (31), resulting in a complete sealing even before the clamping nut (28) is totally twined. This is the result of the innovation implemented in the tube clamping element (30) and in the abutment element of the sealing (29), mainly by means of abutment tabs (35), illustrated in Figure 19. The tube (36) is in its turn held by the teeth (33) of the tube clamping element (30) which by being forced by the clamping nut's cone when moving inwards, moves the o-ring (32) to a retention box, thus allowing a perfect sealing with the tube (36).

Since the abutment tabs have a flexibility which is adjusted to their performance, these must be resistant enough in order not to bend until the o-ring (6) is in its final sealing position on the tube. However, the abutment tabs might be fragile enough so that from their position "B" in Figure 18b, as the clamping nut (28) is further twined and through the conical surface (37), they force the tube clamping element (30) to close, thus clamping the teeth (33) against the tube wall, so that it is fixed inside the valve. Position "C" is then reached, as shown in Fig. 18c. This is possible mainly due to the construction of the tube clamping element (30) which presents a slot (34) projected to give way to a reduction in its diameter and thus absorb the tubes diameter variations.

The geometric form of the tube clamping element (30) has a longitudinal opening slot (34) that allows its diameter to vary depending on the diameter of the tubes or hoses, besides, the conical surface in this component makes it possible for the wall (37) of the clamping nut (28) to push the teeth (33) forcing them to penetrate in the tube surface.

The tube clamping element (30) has the appointed set of flexible abutment tabs (35') that allow the components (29) and (6) to be pressed against the wall (31) and to adjust the tube before the nut reaches the end of its course. By further twining the clamping nut (28), a movement is produced on the tube clamping element (30) which clamps the teeth (33) against the tube, since the longitudinal movement is absorbed by the abutment tabs flexion (35').

The abutment element of the sealing (29) also has some abutment tabs (35) to promote and to ensure the abutment of this component to the valve wall (31).

The integration of a metal washer (38), which substitutes one of the teeth of the tube clamping element (30) allows the fixation / indentation of tubes made of rigid material, such as PVC. This washer has the geometry of a tooth and when used together with the tube clamping element (30) it will clamp rigid tubes, commonly used in high-pressures applications (Figure 20).

Therefore, from the resulting geometric shape of the tube clamping element (30) shown in Figure 19, two important features are guaranteed:
- The abutment element of the sealing leanes against the wall (31) of the valve body (4) ensuring the sealing between the tube and the valve body, even if the tube clamping nut (28) doesn't reach its final position (that is, even before the whole distance is traveled), thus absorbing the tube diameter variations;
- It begins and finalizes the clamping of tube during its course, despite traveling the whole distance, due to diameter variations in tubes currently available.

Unlike the valves currently available, the fixation of the tube (36) doesn't occur simultaneously with the tightness of the o-ring (32), but first it guaranteed the sealing, with the clamping of the abutment element of the sealing against the valve body wall (31) and only then occurs the closing movement of the component (29) pressing the tube and arresting it inside the valve while moving the o-ring to its sealing position with the tube.

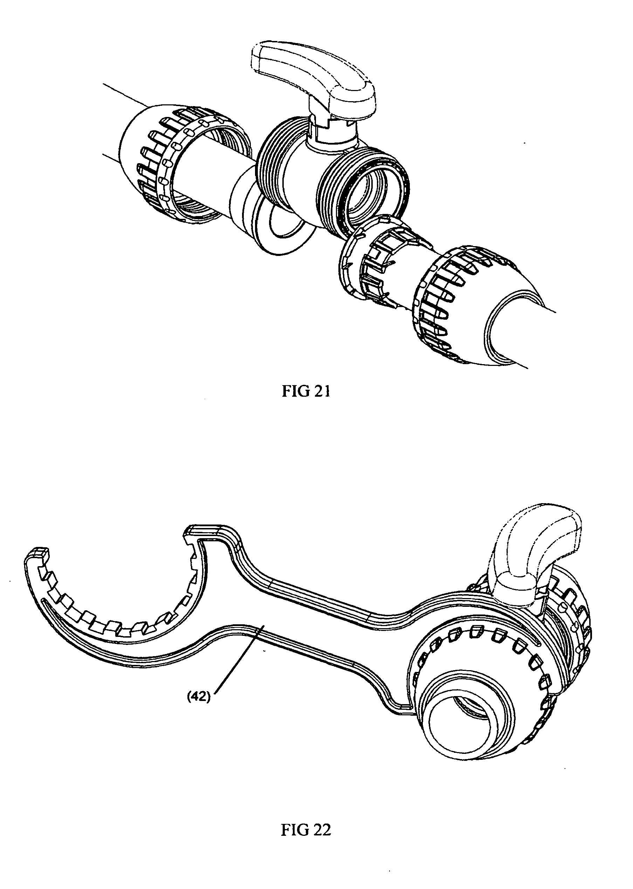

g) The conception of the monoblock valve and its coupling / connection systems to the tube is such, that a quick substitution of the valve body (central area) might occur without interfering with the pipe system , being mainly necessary unscrewing the nuts (28) and slide the valve body between the connectors (see Figure 21). This is due to the fact that none of the connecting components are introduced inside de valve body, they remain instead leaned to the valve body, thus allowing a substitution should the valve be harmed. The fact that the pipe system remains untouchable is a very important factor that increases the products advantages.

The quick maintenance/substitution is an imposed requirement by the consumer society. Nowadays, the repairs of this type of products are no longer carried out, being the products substituted for new ones when damaged. So being, the entire system must be framed facing its rapid substitution when one of its components fails.

The valve herein provided has an accessory, a nut socket wrench (42) presenting different sizes, according to the nuts' dimension. The wrenches are conceived to integrate two nut sizes per wrench. The wrench offers a perfect adjustment to the nut and consequently an easier nut clamping and unbolting. Nowadays, adjustable gib-head keys are used which frequently damage the clamping slots of the nut.

h) Innovative features: a lesser number of components, produces a more compact product, comprising a substantial weight reduction and consequently material reduction without compromising its mechanical features, it offers a clear optimization in design for an enhanced handling and assembly ergonomics, consequently also standing out for its universal implementation to the tubes and for the simplicity of its implementation in pipe systems.

The classical ball valves in thermoplastic material are a clear example of a product that requests large labor for its assembly, since they consist of a large number of components. Based on the analysis of the conventional valves currently available, it has been verified that the component amount of the valves varies from 17 to 21 components, which have to be assembled after being purchased from suppliers. The creation of a product with fewer components is somewhat revolutionary, because it offers a more compact product and a low-cost component management. The effortlessness assembly of the product's few components reduces significantly the assembly process, the costs being almost trivial and coupling and assembly elements being avoided, such as screws, nuts, cramps, quick fitting springs, etc. On the other hand, the whole logistics inherent to component storage and distribution becomes a lot less visible in the final costs of the product.

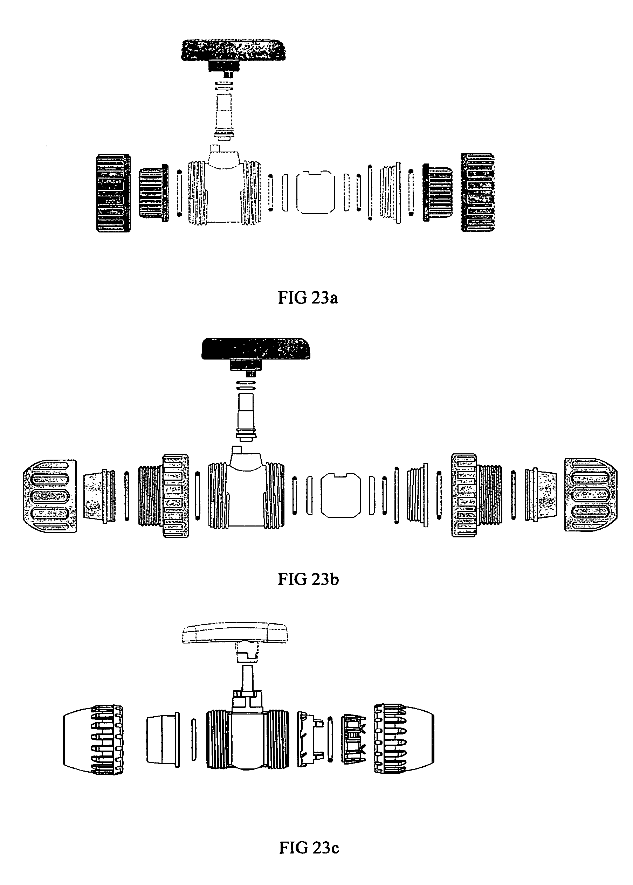

This new valve concept foresees a reduction of 7 to 11 components comparing to the currently available existent products, enabling great optimization of logistics, manufacture and storage costs. So being, the product currently available has different components integrated in its body: the ball (1), the stem (1), the stem o-rings (2), the ball seat o-rings (2), the ball sealing seats (25), the o-rings for the tube connectors (2), the body cover (1) and the body (1). In some situations, however, the component reduction might not be as evident, see Fig. 23a, 23b and 23c.

The new concept concerning the single sealing element's universality, besides promoting an efficient sealing on the entire ball surface, it also promotes the sealing in the connectors' area (31) and in the upper area of the valve stem (41) where the handle is assembled, eliminating a total of seven o-rings.

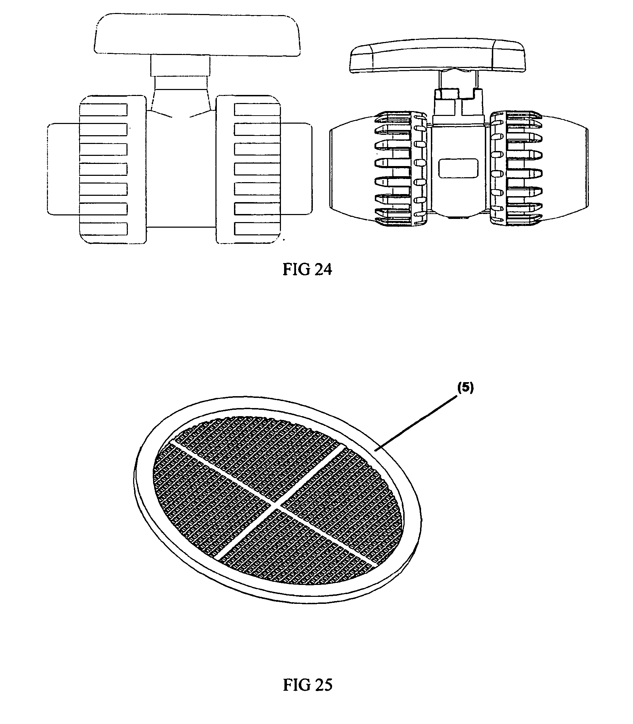

The simple assembly without an excessive amount of components per valve, enables the valve component to remain integral, free from any component loss during the assembly procedure. On the other hand, a smaller quantity of components also assists the assembly process significantly. The valve herein presented has a compact and less intrusive design, thus reducing the space required for its housing in the pipe system. This provides smaller housings in pipe system as well as a simpler handling by assembly or maintenance technicians. The design is pleasant and select, letting the product maintain the inner shape of the ball and spread it to the external lines of the valve body, the design of the product then becoming more appealing and organic. The new design also provides a reduction in the valve weight and size (reduction of plastic material), without compromising the mechanical. Therefore, a substantial reduction was verified merely in the valve body component. As an example, we present the currently available valves comprising a size 40, with an outer diameter of 80mm, while the monoblock valve herein provided presents an outer diameter of 65mm, as clearly illustrated in Figure 24.

A more compact and single body-type design (monoblock), improves the product's performance when under pressure, being pressure values between PN 16 and PN 25 set as goals, even for larger dimensions. Presently, the market offers products conceived for nominal pressures between PN10 and PN20.

Unlike conventional valves that provide different systems for a certain coupling type, comprising different clamping nuts (see Figures 23a and 23b), the valve herein disclosed provides a single nut (see illustration 23c) that can be used both in conventional systems such as gluing, welding and threading, and in quick coupling systems and thermofusion, giving this new valve concept a more universal implementation. In the case of conventional valves and for the quick coupling, there is always the need to integrate a proper "set" in each end of the valve to foster such kind of clamping. The set consists of special connectors, quick clamping nuts, tube clamping elements and o-ring. This set is visibly illustrated in Figure 23b.

i) the introduction of a antiparticle filter (5) inside the valve body is another innovation that improves the whole system's performance, see illustration 25. This can optionally be introduced in the valve body, depending on the implementation type and requirements thereof. The filter will be firmly fixed to the valve body by a half-round hongs.

It should be highlighted that the previously described embodiments of the monoblock ball valve are mainly possible implementation examples, merely set for a clear understanding of the invention's principles. Variations and alterations might be made to the said embodiments without substantially straying from the scope of the invention. All modifications and variations must be included in the scope of the invention and protected by the following claims.

## Claims

1. A manufacture method of monoblock ball valves, wherein its components are overmoulded onto each other in a mould with several cores or in successive moulds, forming a single and solid body, comprising sequence injection moulding, wherein each subsequent component is injected onto the previous component thus covering it, wherein the following components are moulded at least in the following order:
- A ball filling element (1) with a valve control stem;
- A ball (2) which is moulded onto the ball filling element (1);
- A single sealing element (3) which covers the ball (2) and the inside of the valve, also promotes the sealing at the stem and at the valve's inlet and outlet area; and
- A valve body (4).

2. A manufacture method according to claim 1, **characterized in that** the ball filling element (1) integrated with the stem is produced by methods such as: lost-core injection, by introducing mechanisms in the mould such as retractile cores, gas or water assisted injection, by using foaming or nucleation agents or even being injected and submitted to surface finishing procedures to remove imperfections, being later assembled into the sealings and overmoulded with the valve body, thus forming a single body.

3. A manufactured method according to claim 1, **characterized in that** the ball (2) being integrated with the ball filling element (1), produced by methods such as: gas or water assisted injection, or using foaming agents allowing the combination in a single piece, the ball and the ball filling element, eliminating a component of the process.

4. A manufacture method according to claim 1, **characterized in that** the overmoulded ball (2) has an uniform thickness, preferably a thickness between 2.5mm to 3mm.

5. A manufacture method according to claim 1, **characterized in that** the ball (2) and filling element (1), are manufactured by the following processes: as lost-core injection, by introducing mechanisms in the mould such as retractile cores, gas or water assisted injection or by using foaming or nucleation agents wherein the ball filling element (1) is replaced by an equivalent piece produced in material that can later be removed, such as: low melting-point metal or soluble polymers with the aim of removing thickness from the ball(2).

6. A manufacture method according to claim 1, comprising a rotative mechanism of the valve ball (2) inside the injection mould of the valve body (4) and wherein the rotation of the ball (2) is carried out, even still in hot conditions.

7. A manufacture method according to claim 6, **characterized in that** the rotative mechanism of the valve ball (2) inside the injection mould of the valve body (4) consists of a hydraulic cylinder that is fixed in the lower side of the mould, a rack that drives the toothed wheel (connected to the piston rod of the hydraulic cylinder already inside the mould), a associated toothed wheel (driven by the rack) and finally the rotative core associated with the toothed wheel, that promotes the connection of the stem, thus rotating the ball.

8. A manufacture method according to claim 1, **characterized in that** an innocuous and volatile substance or a slip-type antiadherent mould-removable substance is applied around the ball (2) when the component passes from the ball into the mould that will inject the sealing element (3).

9. A manufacture method according to claim 1, **characterized in that** internal reinforcements (24a) and (24b) are introduced over the sealing element (3) or over the ball seats.

10. A manufacture method according to claim 1, **characterized in that** the partition line (x) of all moulds, is placed in a central position to the diameter of the ball body (2) and aligned in the direction of the fluid's passage opening.

11. Monoblock ball valve manufactured according to the method of claim 1, comprising at least the following components:
- a ball filling element (1) with a valve control stem, which has an essentially spherical shape with a cylindrical channel whose axis crosses the ball centre and is essentially transversal to the control stem's - axis;
- a ball (2) with a hollow spherical shape that covers the ball filling element (1);
- a single sleeve-type sealing element (3) covering the entire ball (2) and the whole internal part of the valve, comprising two cylindrical-section openings coincident to the inlet and outlet areas of the valve body (4), the said sleeve having a sealing element opening in the area involving the diameter of the stem; and
- a valve body (4) with an essentially cylindrical hollow shape, comprising inlet and outlet areas in its ends and a radial opening in the middle of the body (4) for the rolling passage of the stem, wherein quick coupling systems are provided both in the inlet and outlet areas.

12. Valve according to claim 11, **characterized in that** the quick coupling systems of the valve body (4) comprise in its inlet and outlet areas:
- an abutment element of the sealing (29) with an essentially annular shape comprising a recto radial abutment surface which receives the end of the tube in its interior and abuts it to the valve body (4) close to the end (31) of the sealing element (3), and has a longitudinal extension to hold the o-ring (32) and the tube clamping element (30);
- an o-ring (32) that is assembled in the grove of the abutment element of the sealing (29);
- a tube clamping element (30), essentially conical and annular-shaped and extending longitudinally, comprising teeth (33) in the interior surface and a slot (34) projected in order to reduce its diameter and to absorb variations in the tubes' diameter; and
- an essentially annular-shaped nut (28) extending longitudinally which comprises an interior thread in one end that will promote the coupling to the valve body (4) as well as a conical interior surface which by being clamped, presses the abutment element of the sealing (29) and the o-ring (32) against the wall (31)and the tube clamping element (30) close so as to press the teeth (18) against the tube.

13. Valve according to claim 12, **characterized in that** the longitudinal movement of the nut (28) is absorbed by flexible abutment tabs (35) located in the contact area with the abutment element of the sealing (29) and also by flexible abutment tabs (35') in the end of tube clamping element (30).

14. Valve according to claim 12, **characterized in that** the tube clamping element (30) comprises a metal washer (38), that substitutes one of its teeth and carries out fastening/indentation of hard tubes, in high-pressure applications.

15. Valve according to claim 11, comprising an anti-particle filter inside the valve body (4).

16. Valve according to claim 11, **characterized in that** the coupling system of the valve body (4) comprise in the inlet and outlet areas:
- an essentially annular-shaped end-element extending longitudinally, wherein the tube is attached by gluing, welding (40), threading or thermofusion, which receives the end of the tube in its interior and leans against the valve body (4) at the end (31) of the sealing element (3);
- an essentially annular-shaped nut (28) extending longitudinally, which comprises an interior thread in one end that will promote the coupling to the valve body (4), as well as an interior surface corresponding to the shape of the end-element of the tube.

17. Valve according to claim 11, **characterized in that** the ball filling element (1) and the ball (2) are made of a material consisting of a certain chemical affinity, preferably Polypropylene, PVC, PVDF, PPSU, PSU, ABS, POM and PEx.

18. Valve according to claim 11, **characterized in that** the single sealing element (3) is made of a TPE - thermoplastic elastomer, with compositions that might have thermoplastics or thermosettings as base matrix, such as Polypropylene (PP), Polyethylene (PE), Polyester (UP), Polyamide (PA), Silicone (SI) and Polyester (UP), preferably TEEE polyester based thermoplastic rubber.

19. Valve according to claim 11, **characterized in that** the valve body (4) is made of PVC-U, PVC-C, PVDF, PP-H, PP-R, PP-R+30%GF, PP-CRT, ABS, PSU, PPSU, PE, PEx, POM, PPO, or others.

## Patentansprüche

1. Verfahren zur Herstellung von Monoblock Kugelhähne, wobei die Komponenten aufeinander in einer Form mit mehreren Kernen oder in folgenden Formen umgespritzt werden, wobei ein einheitliches und konsistentes Körper hergestellt wird, wobei jede nachfolgende Komponente auf der vorherigen Komponente aufgespritzt wird und sie bedeckt, wobei die aufeinanderfolgende Komponente wenigstens in der folgende reihe aufgespritzt werden:
- Ein Kugelfüllelement (1) mit einem Ventil Steuerschaft;
- Eine Kugel (2), die auf die Kugelfüllelement (1) aufgespritzt wird;
- Ein einzelnes Dichtelement (3) der die Kugel (2) und das Innere des Ventils umfasst, und auch die Abdichtung an den Schaft und an die Eingangs- und Ausgangsbereiche des Ventils fördert; und
- Ein Ventilkörper (4).

2. Herstellungsverfahren nach Anspruch 1, **dadurch gekennzeichnet, daß** die Kugelfüllelement (1), der mit dem Schaft integriert ist, durch Verfahren wie Verloren-Kern Einspritzung, durch Mechanismen, wie einziehbaren Kernen, in der Form Einführung, Gas oder Wasser unterstützte Einspritzung, Verschäumung- oder Nukleierungsmitteln Einsetzung, oder durch Einspritztung und dann der Oberflächenbearbeitung verfahren, um Fehler zu entfernen, wobei später in die Dichtung montiert und mit dem Ventilkörper umgespritzt werden, wodurch ein einziger Körper hergestehlt wird.

3. Herstellungsverfahren nach Anspruch 1, **dadurch gekennzeichnet, daß** die Kugel (2) mit dem Kugelfüllelement (1), durch Verfahren wie Gas oder Wasser unterstützte Einspritzung oder mit Treibmittel integriert wird, sodaß das Verfahren die Kombination in einem einzigen Stück erlaubt, so beseitigen eines Bestandteils des Verfahrens.

4. Herstellungsverfahren nach Anspruch 1, **dadurch gekennzeichnet, daß** die angespritzten Kugel (2) eine gleichmäßige wand Dicke hat, vorzugsweise eine Dicke zwischen 2,5 mm und 3 mm.

5. Herstellungsverfahren nach Anspruch 1, **dadurch gekennzeichnet, daß** die Kugel (2) und das Füllelement (1), durch Verfahren wie Verloren-Kern Einspritzung, Mechanismen, wie einziehbaren Kernen, in der Form Einführung, Gas oder Wasser unterstützte Einspritzung, Verschäumung- oder Nukleierungsmitteln Einsetzung, hergestellt werden, wobei die Kugelfüllelement (1) später durch eine entsprechende gleich großes Teil aus niedrigem Schmelzpunkt Metall oder löslichen Polymeren, das später entfernt werden kann, ersetzet wird, mit dem Ziel des Entfernens von wand Dicke auf der Kugel (2).

6. Herstellungsverfahren nach Anspruch 1, umfassend einen Drehmechanismus der Ventilkugel (2) innerhalb der Spritzgussform des Ventilkörpers (4) und wobei die Drehung der Kugel (2) durchgeführt wird, sogar noch bei hohen Temperaturen.

7. Herstellungsverfahren nach Anspruch 6, **dadurch gekennzeichnet, daß** die Drehmechanismus der Ventilkugel (2) innerhalb der Spritzgussform des Ventilkörpers (4) aus einem hydraulischen Zylinder, welcher auf der untere Seite der Form befestigt ist, einer Zahnstange welche die Zahnrad (an der Kolbenstange des Hydraulikzylinders, vorher innerhalb der Form befestigt) treibt an, einem damit verbindet Zahnrad (durch die Zahnstange angetrieben) und schließlich dem drehbaren Kern mit dem Zahnrad, welche die Verbindung des Zahnrades verursacht, verbunden, besteht, sodaß die Kugel dreht.

8. Herstellungsverfahren nach Anspruch 1, **dadurch gekennzeichnet, daß** einen nicht toxischen und flüchtigen Stoff, oder ein gleitend trenbaren Antihaftmittel um die Kugel (2) aufgebracht wird, wenn die Komponente von der Kugel in die Form die das Dichtelement (3) einspritzt, überschreitet.

9. Herstellungsverfahren nach Anspruch 1, dadurch gekenntzeichnet, daß innere Verstärkungen (24a) und (24b) über das Dichtungselement (3) oder über die Kugelsitze eingebracht werden.

10. Herstellungsverfahren nach Anspruch 1, **dadurch gekennzeichnet, daß** die Trennfuge (x) aller Einspritzwerkzeugen durch eine zentrale Position der Durchmesser der Kugel (2) angeordnet und in Richtung der Flüssigkeit Durchtrittsöffnung ausgerichtet ist.

11. Monoblock Kugelhahn, hergestellt gemäß dem Verfahren nach Anspruch 1, umfassend mindestens die folgenden Komponenten:
- Eine Kugelfüllelement (1) mit einem Ventilsteuerung Stange, die eine wesentliche sphärische Form hat, mit einem zylindrischen Kanal, dessen Achse den Kugelmittelpunkt kreuzt und quer zu der Achse der Steuerstange ist;
- Eine Kugel (2) mit einem hohlen sphärischen Form, die den Kugelfüllelement (1) bedeckt;
- Ein einzelner hülsenförmigen Dichtung (3) die die gesamte Kugel (2) und die gesamte innere Teil des Ventils bedeckt, welche zwei zylindrischen Öffnungen mit den Einlass- und Auslassbereiche des Ventilkörpers (4) übereistimmend, aufweist, wobei die obengennante Hülse ein Dichtelement hat, das in dem Bereich den Durchmesser des Bolzen umfassend, offen ist; und
- Ein Ventilkörper (4) mit einem im Wesentlichen zylindrischen hole Form, mit Einlass- und Auslassbereiche an seine beide Enden und einer radiale Öffnung in der Mitte des Körpers (4) zum drehenden Durchgang des Bolzen, wobei Schnellkupplungssysteme an den beiden Einlass- und Auslassbereichen vorgesehen sind.

12. Ventil nach Anspruch 11, **dadurch gekennzeichnet, daß** die Schnellkupplungssysteme des Ventilkörpers (4), in der Einlass- und Auslassbereichen:
- Ein Anschlagelement für die Dichtung (29), mit einer im wesentlichen ringförmigen Form, die eine radiale Stirnanschlagfläche die das Ende des Rohrs in seinem inneren Raum nimmt auf und sie zu den Ventilkörper (4) in der Nähe des Endes (31) der Dichtelement (3) stützt, und eine Längserstreckung um das o-Ring (32) und das Rohr Klemmelement (30) zu halten, hat;
- Ein O-Ring (32), der in die Nut des Anschlagelements für die Dichtung (29) montiert ist;
- Ein Rohrklemmelement (30), mit einer im Wesentlichen konischen und ringförmigen Form, das der Länge nach ausgeordnet ist, mit Zähnen (33) auf der inneren Oberfläche und mit einem Schlitz (34), um seinen Durchmesser zu verringern und Abweichungen des Röhrdurchmessers zu absorbieren; und
- Ein im wesentlichen ringförmigen, sich in Längsrichtung streckend, Mutter (28), welche eine Innengewinde an einem Ende, die die Kopplung mit dem Ventilkörper (4) erlaubt, umfasst, und mit einer konischen inneren Oberfläche, die dadurch geklemmt wird, daß das Anschlagelement der Dichtung (29) und der O-Ring (32) gegen die Wand (31) drückt, und das Rohr Klemmelement (30) schließen, um die Zähne (18) gegen das Rohr drücken, umfasst.

13. Ventil nach Anspruch 12, **dadurch gekennzeichnet, daß** die Längsbewegung der Mutter (28) durch biegbaren Anschlagstreifen (35), die sich in das Kontaktbereich mit dem Anschlagelement des Dichtelements (29) befinden, sowie durch biegbaren Anschlagstreifen (35') die sich in dem Ende des Klemmelements (30) des Rohrs befinden, absorbiert wird.

14. Ventil nach Anspruch 12, **dadurch gekennzeichnet, daß** das Klemmelement (30) des Rohrs eine Metallscheibe (38) aufweist, welche einem seiner Zähne ersetzt und Befestigung / Vertiefung von harten Röhren in Hochdruckanwendungen durchführt.

15. Ventil nach Anspruch 11, das im Inneren des Ventilkörpers (4) ein Filter um Partikeln zu fassen umfasst.

16. Ventil nach Anspruch 11, **dadurch gekennzeichnet, daß** die Kopplungsystem des Ventilkörpers (4) an den Einlass- und Auslassbereichen:
- Ein im wesentlichen ringförmigen, sich in Längsrichtung erstreckend Endelement, wobei das Rohr durch Kleben, Schweißen (40), Gewinde oder Thermofusion befestigt ist, das das Ende des Rohrs in seinem inneren Teil nimmt auf und sich gegen den Ventilkörper (4) an dem Ende (31) des Dichtelements (3) lehnt;
- Eine im wesentlichen ringförmige, sich in Längsrichtung erstreckende Mutter (28), welche an einem Ende ein Innengewinde, die die Kupplung mit dem Ventilkörper (4) erlaubt, sowie einer inneren Oberfläche, die der Form des End-Element entspricht, aufweist,
umfasst.

17. Ventil nach Anspruch 11, **dadurch gekennzeichnet, daß** das Kugelfüllelement (1) und die Kugel (2) aus einem Material, das einer bestimmten chemischen Affinität aufweist, vorzugsweise aus Polypropylen, PVC, PVDF, PPSU, PSU, ABS, POM und PEx bestehen.

18. Ventil nach Anspruch 11, **dadurch gekennzeichnet, daß** die einzige Dichtelement (3) aus einem TPEthermoplastisches Elastomer, dessen Zusammensetzungen Thermoplaste oder Duroplaste, wie Polypropylen (PP), Polyethylen (PE), Polyester (UP), Polyamid (PA), Silikon (SI) und Polyester (UP), vorzugsweise ein thermoplastische Kautschuk auf TEEE Polyester-Basis, als Basematrix umfassen können, gefertigt wird.

19. Ventil nach Anspruch 11, **dadurch gekennzeichnet, daß** der Ventilkörper (4) aus PVC-U, PVC-C, PVDF, PP-H, PP-R, PP-R+30%GF, PP-CRT, ABS, PSU, PPSU, PE, PEx, POM, PPO oder andere, besteht.

## Revendications

1. Un procédé de fabrication d'un robinet monobloc à bille, dans lequel les components sont surmoulés les uns sur les autres dans un moule à plusieurs noyaux ou dans des moules successifs, formant ainsi un seul et solide corps, comprenant un moulage séquentiel de plusieurs éléments, et auquel chaque élément de la séquence est injecté sur le composant précédant, de façon qu'il couvre le même, dans l'ordre suivante :
- Un élément sphérique de remplissage (1) avec une tige de manoeuvre du robinet à bille;
- Une sphère (2) qui est moulée sur l'élément sphérique de remplissage (1);
- Un élément d'étanchéité unique (3) qui couvre la sphère (2) et l'intérieur du corps du robinet à bille, qui favorise également l'étanchéité de la tige et la zone de entrée et sortie du robinet; et
- Un corps du robinet à bille (4).

2. Le procédé de fabrication selon la revendication 1, **caractérisé en ce que** l'élément sphérique de remplissage (1) intégré à la tige est produit selon des méthodes tels que: l'injection sur noyau fusible, en introduisant des mécanismes dans le moule telle que des noyaux rétractiles, l'injection assistée par gaz ou par l'eau, en utilisant des agents d'expansion ou de nucléation ou même en étant injecté et soumis a des procédés de finition de la surface pour éliminer les imperfections, étant de suite assemblé à l'élément d'étanchéité et surmoulé par le corps du robinet à bille, formant ainsi un corps unique.

3. Le procédé de fabrication selon la revendication 1, **caractérisé en ce que** la sphère (2) intégré à l'élément sphérique de remplissage (1) est produite par des méthodes tels que: l'injection assisté par gaz ou de l'eau, ou en utilisant des agents d'expansion, permettant ainsi la combinaison en une seule pièce de la sphère et l'élément de remplissage, en éliminant ainsi un composant du procédé.

4. Le procédé de fabrication selon la revendication 1, **caractérisé en ce que** la sphère surmoulé (2) présente une épaisseur uniforme, de préférence une épaisseur comprise entre 2,5 mm et 3 mm.

5. Le procédé de fabrication selon la revendication 1, **caractérisé en ce que** la sphère (2) et l'élément de remplissage (1) sont fabriqués par les procédés suivants: comme l'injection à noyau perdu, en introduisant des mécanismes dans le moule, telles que des noyaux rétractiles, l'injection assistée par gaz ou par l'eau, ou en utilisant des agents d'expansion ou de nucléation, dans lesquels l'élément sphérique de remplissage (1) est remplacé par une pièce équivalente produite en un matériel qui peut être retiré ultérieurement, tel qu'un métal avec un point de fusion bas ou des polymères solubles, à fin d'éliminer l'épaisseur da la sphère (2).

6. Le procédé de fabrication selon la revendication 1, comprenant un mécanisme rotatif de la sphère du robinet à bille (2) à l'intérieur du moule d'injection du corps du robinet à bille (4) et dans lequel la rotation de la sphère (2) est réalisée, même dans des conditions d'haute température.

7. Le procédé de fabrication selon la revendication 6, **caractérisé en ce que** le mécanisme de rotation de la sphère du robinet à bille (2) à l'intérieur du moule d'injection du corps du robinet à bille (4) consiste à un cylindre hydraulique qui est fixé à la partie inférieure du moule, à une crémaillère qui entraine une roue dentée (connectée à la tige du piston du vérin hydraulique qui est déjà à à l'intérieur du moule), une roue dentée associée (entraîné par la crémaillère) et finalement le noyau rotatif associé à la roue dentée, qui fait la liaison à la tige, faisant ainsi tourner la sphère.

8. Le procédé de fabrication selon la revendication 1, **caractérisé en ce qu'**une substance non toxique et volatile ou un agent amovible anti-adhérent et glissant est appliqué autour de la sphère (2) lorsque le composant passe de la sphère à l'intérieur du moule où sera injecté l'élément d'étanchéité (3).

9. Procédé de fabrication selon la revendication 1, **caractérisé en ce que** des éléments de renforcement internes (24a) et (24b) sont introduits sur les éléments d'étanchéité (3) ou sur les sièges de la sphère.

10. Procédé de fabrication selon la revendication 1, **caractérisé en ce que** le plan de joint (x) de tous les moules est placé dans une position centrale au diamètre du corps sphérique (2) et aligné dans le sens de l'ouverture de passage du fluide.

11. Robinet monobloc à bille, fabriqué selon le procédé de la revendication 1, comprenant les composants suivants :
- Un élément sphérique de remplissage (1) avec tige de manoeuvre, de forme essentiellement sphérique avec un canal cylindrique dont l'axe traverse le centre de la sphère et est essentiellement transversale à l'axe de la tige de contrôle;
- Une sphère (2) avec une forme sphérique creuse qui couvre l'élément de remplissage (1);
- Um seul élément, avec une chemise d'étanchéité (3) recouvrant toute la sphère (2) et toute la partie interne du robinet à bille, comprenant deux ouvertures de section cylindrique coïncidentes aux zones d'entrée et de sortie du corps du robinet à bille (4), le susdit élément d'étanchéité possédant une ouverture pour l'élément d'étanchéité dans la zone entourant le diamètre de la tige; et
- Un corps du robinet à bille (4) avec une forme essentiellement cylindrique creuse, comprenant une entrée et une sortie aux extrémités et une ouverture radiale au milieu du corps (4) pour le passage de la tige tournante, en étant y placés des systèmes d'accouplement rapide, qui équipent chacune des zones d'entrée et de sortie.

12. Robinet à bille selon la revendication 11, **caractérisé en ce que** les systèmes d'accouplement rapide du robinet à bille (4) comprennent en leurs zones d'entrée et de sortie:
- Un élément de butée pour le joint d'étanchéité (29) avec une forme essentiellement annulaire, comprenant une surface plate de butée qui reçoit l'extrémité du tube dans sa partie intérieure et vient en butée contre le corps du robinet à bille (4) au voisinage de l'extrémité (31) de l'élément d'étanchéité (3), et qui a une extension longitudinale pour maintenir le joint torique (32) et l'élément de serrage du tube (30);
- Un joint torique (32) qui est assemblé dans la rainure de l'élément de butée du joint d'étanchéité (29) :
- Un élément de serrage de tube (30), essentiellement de forme annulaire et conique et qui s'étend longitudinalement, comprenant des dents (33) dans la surface intérieure et une fente (34) prévue pour réduire son diamètre et absorber les variations du diamètre des tubes;
- Un écrou essentiellement de forme annulaire (28) s'étendant longitudinalement, qui comprend un taraudage intérieur dans une extrémité qui assure le couplage au corps du robinet à bille (4), ainsi que une surface conique intérieure qui, quand elle est serrée, presse l'élément de butée du joint d'étanchéité (29) et le joint torique (32) contre la paroi (31) et l'élément de serrage de tube (30) voisin, de façon à presser les dents (18) contre le tube.

13. Robinet à bille selon la revendication 12, **caractérisé en ce que** le mouvement longitudinal de l'écrou (28) est absorbé par des languettes de butée flexibles (35) situées dans la zone de contact avec l'élément de butée du joint d'étanchéité (29) et également par des languettes de butée flexible (35') dans l'extrémité de l'élément de serrage du tube (30).

14. Robinet à bille selon la revendication 12, **caractérisé en ce que** l'élément de serrage du tube (30) comprend une rondelle métallique (38), qui remplace un de ses dents et effectue la fixation / entaille de tubes durs, dans des applications haute pression.

15. Robinet à bille selon la revendication 11, comprenant un filtre antiparticules à l'intérieur du corps du robinet à bille (4).

16. Robinet à bille selon la revendication 11, **caractérisé en ce que** le système d'accouplement au corps du robinet à bille (4) comprend, à l'entrée et à la sortie:
- Un élément final de forme essentiellement annulaire qui s'étend longitudinalement, auquel le tube est fixé par collage, soudage (40), liaison femelle taraudée ou thermofusion, qui reçoit l'extrémité du tube dans sa partie intérieure et s'appuie contre le corps du robinet à bille (4) à l'extrémité (31) de l'élément d'étanchéité (3);
- Un écrou essentiellement de forme annulaire (28) qui s'étend longitudinalement, qui comprend un taraudage intérieur dans une extrémité qui assure le couplage au corps du robinet à bille (4), ainsi qu'une surface intérieure correspondant à la forme de l'élément final du tube.

17. Robinet à bille selon la revendication 11, **caractérisé en ce que** l'élément de remplissage (1) et la sphère (2) sont fabriqués en un matériau qui a une certaine affinité chimique, de préférence le polypropylène, le PVC, le PVDF, PPSU, PSU, ABS, POM et PEx.

18. Robinet à bille selon la revendication 11, **caractérisé en ce que** un seule élément d'étanchéité (3) est fabriqué en TPE - élastomère thermoplastique, avec des compositions qui peuvent avoir comme base les thermoplastiques ou les thermosettings, tels que le polypropylène (PP), polyéthylène (PE), le polyester (UP), polyamide (PA), silicone (SI) et polyester (UP), de préférence un caoutchouc thermoplastique basé sur polyester TEEE.

19. Robinet à bille selon la revendication 11, **caractérisé en ce que** le corps du robinet à bille (4) est fabriqué en PVC-U, PVC-C, PVDF, PP-H, PP-R, PP-R+30%GF, PP-CRT, ABS, PSU, PPSU, PE, PEx, POM, PPO, ou d'autres.
